# EUROPÄISCHE PATENTANMELDUNG

(11) **EP 3 581 959 A1**
(43) Veröffentlichungstag der Anmeldung: **18.12.2019**
(21) Anmeldenummer: 19175133.8
(22) Anmeldetag: 17.05.2019
(51) Int. Cl.: G01S 7/481, G01S 17/42

(54) **OPTOELEKTRONISCHER SENSOR UND VERFAHREN ZUR ERFASSUNG VON OBJEKTEN**

(30) Priorität: 11.06.2018 DE 102018113849
(71) Anmelder: Sick AG, 79183 Waldkirch (DE)
(72) Erfinder: Baumgartner, August, 79100 Freiburg (DE); Hanselmann, Gabriel, 79369 Whyl (DE); Jägel, Matthias, 79104 Freiburg (DE)

(57) **Zusammenfassung**

Es wird ein optoelektronischer Sensor (10) zur Erfassung von Objekten in einem Überwachungsbereich (20) angegeben, der eine um eine Drehachse (18) bewegliche Abtasteinheit (12) mit mindestens einem Abtastmodul (22) zur Abtastung des Überwachungsbereichs (22) im Verlauf der Bewegung der Abtasteinheit (12) um die Drehachse (18) und zum Erzeugen von entsprechenden Empfangssignalen sowie eine Auswertungseinheit (46) zur Gewinnung von Informationen über die Objekte aus den Empfangssignalen aufweist, wobei das Abtastmodul (22) mindestens einen Lichtsender (24) zum Aussenden eines Lichtstrahls (28) oder mehrerer voneinander separierter Lichtstrahlen (28) und mindestens einen Lichtempfänger (34) zum Erzeugen der Empfangssignale aus den von Objekten remittierten Lichtstrahlen (30) umfasst. Dabei weist das Abtastmodul (22) eine Verstelleinheit (38, 42) auf, mittels derer das Abtastmodul (22) dynamisch innerhalb der Drehbewegung um einen Kippwinkel (β) verkippbar und/oder um einem Drehwinkel (γ) verdrehbar ist.

## Beschreibung

Die Erfindung betrifft einen optoelektronischer Sensor und ein Verfahren zur Erfassung von Objekten in einem Überwachungsbereich nach dem Oberbegriff von Anspruch 1 beziehungsweise 12.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen.

Um den Messbereich eines einstrahligen Lichttasters zu erweitern, kann der Abtaststrahl bewegt werden, wie dies in einem Laserscanner geschieht. Dort überstreicht ein von einem Laser erzeugter Lichtstrahl mit Hilfe eines Drehspiegels periodisch den Überwachungsbereich. Zusätzlich zu der gemessenen Abstandsinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. Es ist auch bekannt, den Drehspiegel zu verkippen, um die Abtastebene zu wechseln oder einen dreidimensionalen Bereich abzutasten. Die EP 1 965 225 A2 oder auch die DE 10 2014 100 245 B3 offenbaren hierfür eine Reihe von möglichen Mechanismen. Manche Laserscanner verwenden anstelle eines Drehspiegels einen rotierenden Messkopf mit Lichtsendern und Lichtempfängern, wie beispielsweise in DE 197 57 849 B4.

Um zusätzliche Messinformation zu erhalten, werden zum Teil Mehrlagenscanner mit mehreren Abtaststrahlen verwendet. Ein Anwendungsbeispiel ist die Steuerung autonomer Flurförderfahrzeuge, die bei der Fahrt durch Hochregallager oder Produktionsflächen zuverlässig Hindernisse wie Stufen, Regale oder Personen erkennen und verfolgen müssen. Um hier Detektionslücken zwischen den einzelnen Lagen oder Abtastebenen zu schließen, kann die Anzahl der Lagen erhöht werden, aber das bedarf komplexerer Geräte und lässt die zu verarbeitende Datenrate ansteigen. Ein weiteres Problem in der Produktion mehrlagiger Systeme ist der Ausgleich von Justagetoleranzen beziehungsweise der Verlust an Genauigkeit durch Justagetoleranzen oder Drehzahlschwankung.

In der US 8 767 190 B2 ist für jede Abtastebene ein eigener Lichtsender und Lichtempfänger vorgesehen. Damit besteht dann prinzipiell die Möglichkeit, jede einzelne Abtastebene wie gewünscht einzujustieren. Das kostet aber nicht nur einen enormen Aufwand für die Bauteile und die jeweilige individuelle Justage. Die Abtastebenen sind nur statisch ausrichtbar und können im Nachhinein nicht korrigiert werden. Die Flexibilität ist dadurch deutlich eingeschränkt. Verzug durch die Fixierung der Abtastebenen, etwa Klebung der eingestellten Justage, oder Verzug durch Drehzahl muss toleriert werden.

In der EP 2 863 176 A2 wird eine rotierende Plattform beschrieben, auf der verschiedene Erfassungsmodule rotieren können. Eine Ausführungsform mit Erfassungsmodulen für optoelektronische Abstandsmessung verwendet lediglich zwei Module mit jeweils einem Abtaststrahl in starrer Ausrichtung auf dieselbe Abtastebene für eine zweikanalige, redundante Messwerterfassung. In einer anderen Ausführungsform werden mehrere abstandsmessende Erfassungsmodule ungefähr in Richtung der Drehachse ausgerichtet und dabei gegeneinander verkippt, aber ebenfalls starr. Somit geben die Erfassungsmodule und deren in der Produktion fixierte Ausrichtung die Konfiguration vor. Eine anwendungsspezifische, flexible Anpassung ist nicht möglich.

Die DE 10 2004 014 041 A1 befasst sich mit einem Sensorsystem zur Hinderniserkennung nach Art eines Laserscanners, das eine Laserzeile und eine Reihe von Fotodioden verwendet. Derartige Reihenanordnungen haben den mehrfach genannten Nachteil, dass sie fixe, hier zudem zwingend äquidistante Abstände der Abtastebenen festlegen. In einer Ausführungsform der DE 10 2004 014 041 A1 sind drei Abtastsysteme um jeweils 120° in Drehrichtung gegeneinander versetzt angeordnet, deren Elevationswinkel einmal pro Umlauf durch einen Hubmotor variiert wird. So wird ein Elevationswinkelbereich unter den Abtastsystemen aufgeteilt. Das genannte Zahlenbeispiel sieht vor, dass die drei Abtastsysteme zunächst die Elevationswinkelbereiche {12°, 18°}, {0°, 6°}, {-12°, -6°} und dann nach Umschaltung nach einer Umdrehung die Elevationswinkelbereiche {6°, 12°}, {-6°, 0°}, {-18°, -12°} abdecken. Letztlich wird so eine dichte Schar von Abtastebenen im Elevationswinkelbereich {-18°, 18°} erzeugt, aber keine flexible Anpassung.

Es ist daher Aufgabe der Erfindung, die Abtastung mit einem gattungsgemäßen Sensor zu verbessern.

Diese Aufgabe wird durch einen optoelektronischer Sensor und ein Verfahren zur Erfassung von Objekten in einem Überwachungsbereich nach Anspruch 1 beziehungsweise 12 gelöst. Der Sensor weist mindestens ein Abtastmodul und vorzugsweise mehrere Abtastmodule auf. Ein Abtastmodul erzeugt und empfängt jeweils mindestens einen Lichtstrahl und weist dafür mindestens einen Lichtsender und mindestens einen Lichtempfänger auf. Sofern ein Abtastmodul mehrstrahlig ist, so sind die mehreren Lichtstrahlen nicht als Strahlen im Sinne der Strahlenoptik innerhalb eines größeren Lichtbündels zu verstehen, sondern als voneinander separierte Lichtbündel und somit vereinzelte Abtaststrahlen, die im Überwachungsbereich beim Auftreffen auf ein Objekt entsprechend vereinzelte, voneinander beabstandete Lichtflecken erzeugen. Die Abtastmodule sind in einer um eine Drehachse rotierenden oder zumindest schwenkbaren Abtasteinheit untergebracht, so dass die Lichtstrahlen den Überwachungsbereich im Verlauf der Bewegung abtasten. Eine Auswertungseinheit gewinnt aus den Empfangssignalen der Lichtempfänger Informationen über die Objekte an den jeweils mit den Lichtstrahlen angetasteten Punkten des Überwachungsbereichs.

Die Erfindung geht von dem Grundgedanken aus, dass mindestens eines der Abtastmodule eine Verstelleinheit aufweist, vorzugsweise alle, und dass durch dynamisches Verkippen der Elevationswinkel variiert wird. Die Lichtstrahlen tasten daher den Überwachungsbereich mit einem Abtastmuster ab, das aus der Überlagerung der Bewegung der Abtasteinheit um die Drehachse und der dynamischen Verkippung der Abtastmodule entsteht. Anstelle einer Verkippung oder zusätzlich dazu ist bei mehrstrahligen Abtastmodulen auch ein Verdrehen um deren Hauptblickrichtung denkbar. Dadurch rücken die mehreren Lichtstrahlen des Abtastmoduls in Elevation näher zusammen oder entfernen sich voneinander. Für ein einstrahliges Abtastmodul ist ein Verdrehen allenfalls sinnvoll, wenn der Drehpunkt exzentrisch liegt. Die Verstelleinheit ist vorzugsweise in der Lage, einzeln auf die Abtastmodule einzuwirken, wobei eine gekoppelte Verstellung für mehrere oder sogar alle Abtastmodule zunächst nicht ausgeschlossen wird.

Die Erfindung hat den Vorteil, dass eine hochflexible Einstellung und Veränderung der abgetasteten Bereiche ermöglicht wird. So können auch unterschiedliche Anforderungen wie eine breite Abtastung des dreidimensionalen Raumes und eine schnelle Abtastung insbesondere von Teilbereichen erfüllt werden. Die Abtastung kann insbesondere stetig für einzelne Abtastmodule mit separatem Bewegungsprofil nachgeführt werden. Je nach aktuellem Bedarf an Messdaten lassen sich die passenden Abtastmuster mit hoher Variabilität wählen. So wird auch mit wenigen Abtastmodulen beziehungsweise Lichtstrahlen eine dreidimensionale Raumabtastung in der von der Anwendung benötigten Form möglich. Die Verstellung des Kippwinkels beziehungsweise Drehwinkels kann auch Justagetoleranzen durch entsprechende Ansteuerung ausgleichen, also mittels einer flexiblen Softwarenachstellung anstelle einer fixen Hardwareanpassung. Auf dem gleichen Weg erfolgt bei Bedarf eine Korrekturnachstellung der Ausrichtungen und Abtastmuster bei unterschiedlichen Motordrehzahlen. Die erforderliche genaue Ausrichtung kann eingelernt werden. Das variable Design reduziert die Variantenvielfalt, weil die Flexibilität in der Einstellung zahlreiche Hardwarekonfigurationen ersetzt.

Die Verstelleinheit ist bevorzugt dafür ausgebildet, das Abtastmodul periodisch zwischen zwei Kipp- oder Elevationswinkeln hin und her zu verkippen. Es entsteht eine Art Schwingbewegung, die sich mit der ebenfalls periodischen Bewegung der Abtasteinheit überlagert. Über Phase, Frequenz und Amplitude der periodischen Verkippung des Abtastmusters wird das gewünschte 3D-Abtastmuster eingestellt.

Die Verstelleinheit ist bevorzugt dafür ausgebildet, das Abtastmodul periodisch zwischen zwei Drehwinkeln beziehungsweise Drehstellungen hin und her zu verdrehen. Damit wird alternativ oder zusätzlich zu einem Verkippen eines Abtastmoduls dessen Verdrehen um die Hauptblickrichtung zum Einstellen des 3D-Abtastmusters genutzt.

Die Verstelleinheit ist bevorzugt dafür ausgebildet, den Kippwinkel und/oder den Drehwinkel des Abtastmoduls mit festem Bezug zur Drehbewegung der Abtasteinheit einzustellen. Damit wird ein wohldefiniertes 3D-Abtastmuster erzeugt. Durch vorteilhafte Synchronisation beispielsweise einmal je Umdrehung lässt sich sicherstellen, dass es keine unerwarteten Abweichungen gibt. Die Abtastmodule können einen gemeinsamen oder individuellen Frequenz- und/oder Phasenversatz zu der Drehbewegung der Abtasteinheit aufweisen, um zusätzliche Freiheitsgrade für das Abtastmuster zu schaffen. Die Verstelleinheit ist bevorzugt dafür ausgebildet, einen Kipp- und/oder Drehwinkel beziehungsweise eine Kipp- und/oder Drehstellung zu halten. Damit wird eine Abtastebene zumindest für eine gewisse Zeit festgelegt, d.h. für das in seiner Kipp- und/oder Drehstellung gehaltene Abtastmodul auf ein 3D-Abtastmuster zugunsten einer erhöhten Scanfrequenz beziehungsweise zeitlich höher aufgelösten Erfassung dieser Abtastebene verzichtet. Es ist auch möglich, dass mehrere Lichtstrahlen im selben Elevationswinkel gehalten werden, was in einer redundanten oder noch höher zeitlich aufgelösten Abtastung der betreffenden Abtastebenen resultiert.

Die Verstelleinheit ist bevorzugt dafür ausgebildet, den Kippwinkelbereich und/oder den Drehwinkelbereich dynamisch auf einen interessierenden Bereich einzuschränken. Dazu wird der Kippwinkel- beziehungsweise Drehwinkelbereich gezielt reduziert und damit ein kleineres 3D-Abtastmuster eingestellt, bis hin zum Anhalten auf einer bestimmten Abtastebene. Beispielsweise werden die Kipp- beziehungsweise Drehwinkel an eine Fahrtgeschwindigkeit angepasst, oder auf einen Bereich eingeschränkt, der für die Anwendung relevant ist, etwa ein Bodenblickwinkel nur in Fahrtrichtung. Die Beschränkung auf einen interessierenden Bereich ist im gesamten Bereich zwischen einer maximalen Fächerung der Abtastung bis hin zur Ausrichtung sämtlicher Lichtstrahlen auf dieselbe Abtastebene denkbar.

Die Auswertungseinheit ist bevorzugt dafür ausgebildet, der Verstelleinheit einen interessierenden Bereich aufgrund von Messdaten vorzugeben. In dieser Ausführungsform erfolgt die Auswahl eines interessierenden Bereichs nicht nur anwendungsspezifisch, sondern sogar dynamisch auf Basis der eigenen Messung. Wird beispielsweise in einer anfänglich noch aufgefächerten Abtastung etwas erfasst, so kann dann ganz gezielt die entsprechende Umgebung genauer abgetastet oder sogar ein Objekt verfolgt werden (Objekttracking).

Die Verstelleinheit weist vorzugsweise einen Aktor auf, welcher das Abtastmodul entsprechend dem einzustellenden Kippwinkel gegen eine Lagerung radial nach außen drückt. Damit kann durch einen einfachen linearen Aktor das Abtastmodul verkippt werden.

Die Verstelleinheit weist vorzugsweise einen Aktor auf, welcher eine Leiterkarte mit dem Lichtsender und dem Lichtempfänger senkrecht zu deren optischer Achse bewegt. In dieser Ausführungsform wird durch Auf- und Abbewegung der Leiterkarte ein variabler Versatz zu der Sende- und Empfangsoptik erzeugt, der effektiv die Ausrichtung der Lichtstrahlen verkippt. Auf diese Weise müssen nur kleine Massen bewegt werden, und zwar über die Brennweite der Optiken mit vorteilhaftem großem Hebel.

Die Abtastmodule sind bevorzugt untereinander identisch aufgebaut. Das vereinfacht die Entwicklung und Herstellung des Sensors ganz erheblich. Die Flexibilität und Einstellbarkeit ergibt sich durch die Kipp- und Drehwinkel.

Zumindest einige Abtastmodule sind bevorzugt übereinander und/oder in Drehrichtung der Abtasteinheit zueinander versetzt angeordnet. Es gibt im Grundsatz diese zwei Freiheitsgrade, um mehrere Abtastmodule physisch in der Abtasteinheit unterzubringen. Dabei spielt ein Versatz in Drehrichtung, also im Scanwinkel, bei üblichen Drehzahlen und der dagegen quasi-statischen Szenerie keine Rolle. Ein Höhenversatz von Abtastmodulen kann sich je nach Baugröße geringfügig auf die Abtastebenen auswirken.

Die Auswertungseinheit ist bevorzugt dafür ausgebildet, aus einer Lichtlaufzeit zwischen Aussenden der Lichtstrahlen und Empfangen der remittierten Lichtstrahlen einen Abstand des Objekts zu bestimmen. Der Sensor wird dadurch entfernungsmessend. Alternativ wird lediglich die Anwesenheit eines Objekts festgestellt und beispielsweise als Schaltsignal ausgegeben.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung eines als Laserscanner ausgebildeten optischen Sensors;
- Fig. 2: eine Schnittdarstellung eines mehrstrahligen Abtastmoduls für einen Laserscanner;
- Fig. 3a: eine Schnittdarstellung eines Abtastmoduls zur Erläuterung des Kippwinkels;
- Fig. 3b: eine Draufsicht auf den Ein- und Austrittsbereich der Lichtstrahlen eines Abtastmoduls zur Erläuterung des Drehwinkels;
- Fig. 4: eine Schnittdarstellung einer weiteren Ausführungsform als Laserscanner mit alternativer Verstellaktorik;
- Fig. 5: ein beispielhaftes 3D-Abtastmuster eines Laserscanners;
- Fig. 6: ein weiteres beispielhaftes 3D-Abtastmuster mit zusätzlicher fester Abtastebene; und
- Fig. 7: ein weiteres beispielhaftes 3D-Abtastmuster nur noch aus festen Abtastebenen.

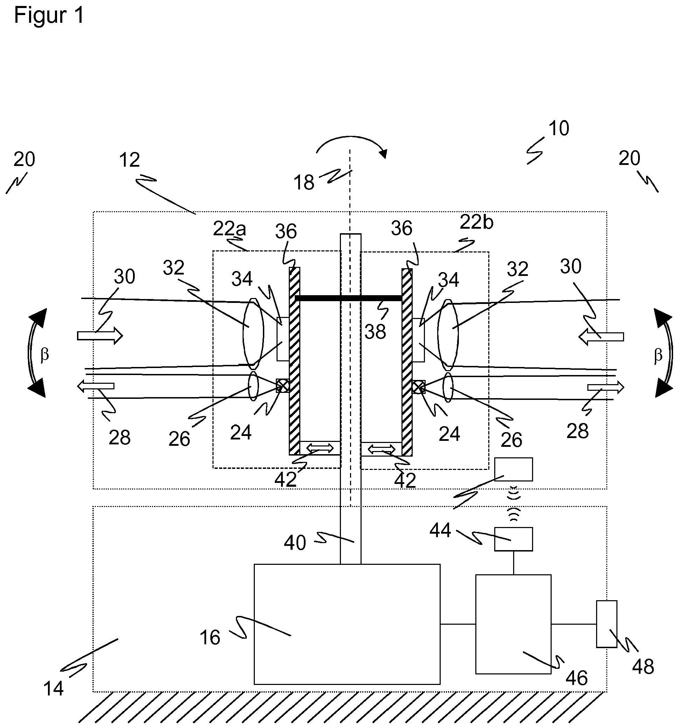

Figur 1 zeigt eine schematische Schnittdarstellung durch einen optoelektronischen Sensor 10 in einer Ausführungsform als zweistrahliger Laserscanner. Der Sensor 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Drehbewegung um eine Drehachse 18 versetzt, um so einen Überwachungsbereich 20 abzutasten.

In der Abtasteinheit 12 sind mehrere Abtastmodule 22a-b vorgesehen. Im dargestellten Beispiel sind es zwei Abtastmodule 22a-b, die bezüglich der Drehbewegung um die Drehachse 18 um 180° zueinander versetzt sind, allgemein sind bis zu zehn und im Einzelfall auch mehr Abtastmodule denkbar, beispielsweise drei Abtastmodule im 120°-Versatz oder vier Abtastmodule im 90°-Versatz, wobei auch ein ungleichmäßiger Winkelversatz nicht ausgeschlossen ist und weiterhin Abtastmodule im gleichen Winkel bezüglich der Drehbewegung übereinander angeordnet werden können.

Die Abtastmodule 22a-b weisen jeweils einen Lichtsender 24 auf, beispielsweise mit LEDs oder Lasern in Form von Kantenemittern oder VCSELs, die mit Hilfe einer stellvertretend als einfache Linse dargestellten Sendeoptik 26 einen Sendelichtstrahl 28 in den Überwachungsbereich 20 aussenden. Treffen die Sendelichtstrahlen 28 in dem Überwachungsbereich 20 auf ein Objekt, so kehren entsprechende remittierte Lichtstrahlen 30 zu dem Sensor 10 zurück. Die remittierten Lichtstrahlen 30 werden von einer Empfangsoptik 32 auf einen Lichtempfänger 34 geführt, beispielsweise eine Photodiode, eine APD (Avalanche Photodiode) oder auch einen SPAD-Empfänger (Single-Photon Avalanche Diode) mit einer Vielzahl von SPADs, der darauf ein jeweiliges elektrisches Empfangssignal erzeugt.

Lichtsender 24 und Lichtempfänger 34 sind auf einer Leiterkarte 36 angeordnet. Die Leiterkarte 36 wiederum ist an einer Stelle über ein Halteelement 38 in einem radialen Abstand zu einer Welle 40 des Antriebs 16 fixiert. An einer dazu versetzten Position ist ein Aktor 42 vorgesehen, der den radialen Abstand zu der Welle 40 entsprechend einer dynamischen Ansteuerung variiert. Dadurch wird das jeweilige Abtastmodul 22a-b um einen dynamisch veränderlichen Winkel β verkippt. Diese Verstelleinheit 38, 42 für den Kippwinkel β ist nur ganz schematisch erläutert, da es für das Prinzip nicht darauf ankommt, wie die konkrete Umsetzung erfolgt. Beispiele für Aktoren 42 sind Tauchspulen, Zahnstangen oder Piezomotoren, und es kann ein aufwändigerer mechanischer Aufbau etwa mit einem Feder- beziehungsweise Dämpfersystem zum Vorspannen vorgesehen sein.

Der in Figur 1 gezeigte optische Aufbau ist rein beispielhaft zu verstehen. So wäre alternativ jede andere an sich beispielsweise von eindimensionalen optoelektronischen Sensoren oder Laserscannern bekannte Anordnung wie etwa eine koaxiale Anordnung, die Verwendung eines Umlenk- oder Strahlteilerspiegels oder die Anordnung von Lichtsender 24 und Lichtempfänger 34 auf separaten Leiterkarten möglich.

Eine berührungslose Versorgungs- und Datenschnittstelle 44 verbindet die bewegliche Abtasteinheit 12 mit der ruhenden Sockeleinheit 14. Dort befindet sich eine Steuer- und Auswertungseinheit 46, die zumindest teilweise auch auf der Leiterkarte 36 oder an anderem Ort in der Abtasteinheit 12 untergebracht sein kann. Die Steuer- und Auswertungseinheit 46 steuert den Lichtsender 24 und erhält das Empfangssignal des Lichtempfängers 34 zur weiteren Auswertung. Sie steuert außerdem den Antrieb 16, den Aktor 42 und erhält das Signal einer nicht gezeigten, von Laserscannern allgemein bekannten Winkelmesseinheit, welche die jeweilige Winkelstellung der Abtasteinheit 12 bestimmt.

Zur Auswertung wird vorzugsweise mit einem an sich bekannten Lichtlaufzeitverfahren die Distanz zu einem angetasteten Objekt gemessen. Aus der Information über die Winkelstellung von der Winkelmesseinheit sowie der Einstellung des Aktors 42 ist jeweils bekannt, in welche Raumrichtung die jeweilige Entfernung gemessen wurde. Somit wird im Verlauf der Dreh- und Kippbewegungen ein dreidimensionaler Überwachungsbereich 20 abgetastet, und es werden entsprechende 3D-Messpunkte erzeugt. Die Erfassungsdaten können über eine Sensorschnittstelle 48 ausgegeben werden. Die Sensorschnittstelle 48 oder ein weiterer, nicht gezeigter Anschluss dienen umgekehrt als Parametrierschnittstelle.

Während der Rotation des Sensors 10 wird durch jeden der Sendelichtstrahlen 28 jeweils eine Fläche abgetastet. Nur bei einem fixen Elevationswinkel von β=0°, also einem horizontalen Sendelichtstrahl 28 wie in Figur 1, wird dabei eine Ebene des Überwachungsbereichs 20 abgetastet. Bei Variation des Elevationswinkels β entsteht ein dreidimensionales Abtastmuster.

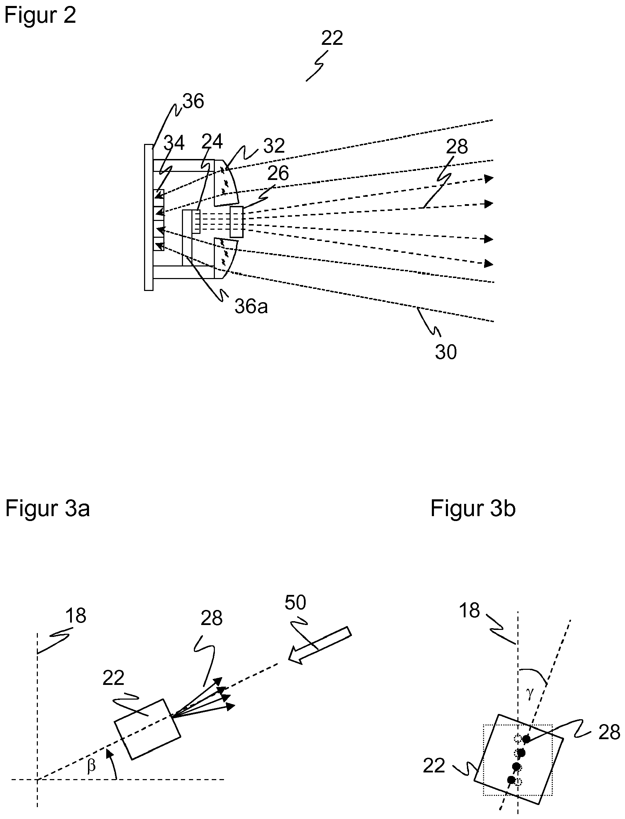

Figur 2 zeigt eine alternative Ausführungsform eines Abtastmoduls 22, das im Gegensatz zu den einstrahligen Abtastmodulen 22a-b der Figur 1 mehrstrahlig ausgebildet ist. Der Sensor 10 kann je nach Ausführungsform einstrahlige Abtastmodule 22 oder mehrstrahlige Abtastmodule 22 oder eine Mischung aus beidem aufweisen.

Das Abtastmodul 22 erzeugt mit mehreren Lichtquellen des Lichtsenders 24 mehrere voneinander räumlich separierte Sendelichtstrahlen 28. Alternativ wird eine Lichtquelle durch Strahlteiler, ein diffraktives optisches Element oder dergleichen in mehrere Sendelichtstrahlen 28 geteilt. Im dargestellten Beispiel sind es vier Sendelichtstrahlen 28, allgemein sind typischerweise zwei bis zehn Sendelichtstrahlen je Abtastmodul 22 möglich, unter Umständen auch mehr. Der Winkelversatz der Sendelichtstrahlen 28 ist vorzugsweise, aber nicht notwendig gleichmäßig.

Dementsprechend entstehen mehrere remittierte Lichtstrahlen 30, die auf dem Lichtempfänger 34 räumlich separierte Empfangslichtflecken erzeugen. Der Lichtempfänger erzeugt je ein Empfangssignal pro remittiertem Lichtstrahl 30. Dazu kann der Lichtempfänger 34 mehrere Lichtempfangselemente aufweisen, oder es werden Bereiche eines ortsaufgelösten Lichtempfängers 34 einem remittierten Lichtstrahl 30 zugeordnet.

Der optische Aufbau des Abtastmoduls 22 unterscheidet sich von der Figur 1. Auch dieser nun koaxiale statt biaxiale Aufbau mit einer separaten Leiterkarte 36a für den Lichtsender 24 soll lediglich ein weiteres Beispiel geben, denn wie schon ausgeführt können erfindungsgemäß Abtastmodule 22 mit jeglichem an sich bekannten optischen Aufbau verwendet werden.

Figur 3a ist eine Schnittdarstellung eines Abtastmoduls 22, bei dem der interne Aufbau zur vereinfachten Darstellung weggelassen wurde und nur noch die Sendelichtstrahlen 28 eingezeichnet sind. Wie schon erläutert, werden die Abtastmodule 22 dynamisch verkippt. Figur 3a erläutert nochmals den Kippwinkel β, der beispielsweise gegen eine Senkrechte zu der Drehachse 18 gemessen wird. Die Hauptblickrichtung oder Mittelachse des Abtastmoduls 22 wird also um den Kippwinkel β aus einer zentralen Scanebene β=0 verkippt. Die Nullstellung ist eine austauschbare Konvention. Die einzelnen Abtaststrahlen eines mehrstrahligen Abtastmoduls 22 weichen von dem Kippwinkel β noch entsprechend ihrem gegenseitigen Winkelabstand ab. Bei einem einstrahligen Abtastmodul 22a-b entspricht die Hauptblickrichtung dem einzigen Sendelichtstrahl 28 und dem Kippwinkel β.

Figur 3b zeigt eine Draufsicht auf den Ein- und Austrittsbereich eines Abtastmoduls 22. Die Perspektive dieser Draufsicht ist in Figur 3a durch einen Pfeil 50 angedeutet. Mit Figur 3b soll eine alternative oder zusätzliche dynamische Veränderung der Abtastung durch Verdrehen eines Abtastmoduls 22 illustriert werden. Das Abtastmodul 22 ist hier gegen die mit gepunkteten Linien gezeigte aufrechte Orientierung um einen Drehwinkel γ verdreht. Der Drehwinkel γ misst demnach eine Verdrehung des Abtastmoduls 22 um dessen eigene Hauptblickrichtung. Mit zunehmendem Drehwinkel rücken effektiv, nämlich in Elevations- oder Höhenrichtung, die Sendelichtstrahlen 28 dichter zusammen, bis bei auf der Seite liegendem Abtastmodul 22 mit y=90° alle Sendelichtstrahlen 28 dieselbe Elevation aufweisen und dadurch nur noch dieselbe Abtastebene in Hauptblickrichtung abgetastet wird, diese dafür mehrfach.

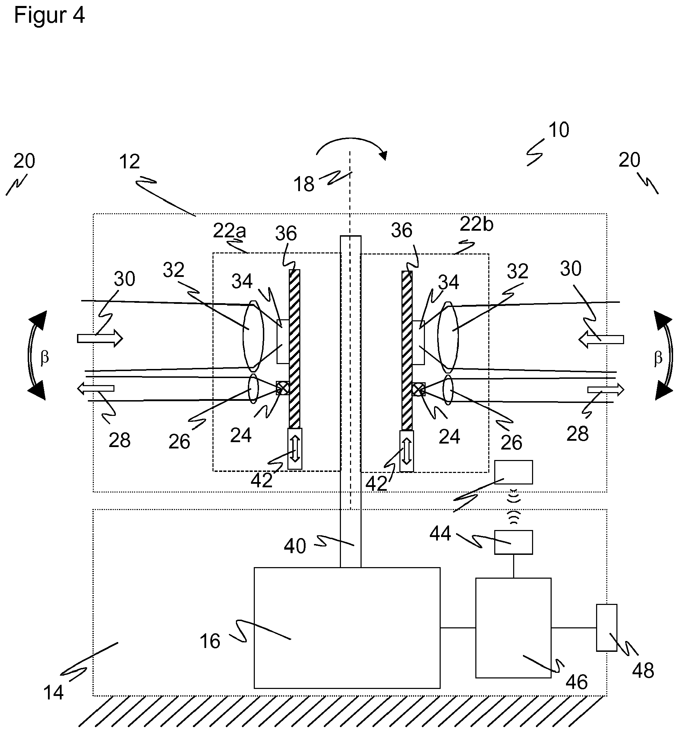

Figur 4 zeigt eine weitere Schnittdarstellung durch einen optoelektronischen Sensor 10 in einer Ausführungsform als zweistrahliger Laserscanner. Diese Ausführungsform unterscheidet sich von derjenigen gemäß Figur 1 durch ihre Verstelleinheit. Statt eines Aktors 42 wie in Figur 1, der die Leiterkarte 36 gegen eine Lagerung radial nach außen drückt, wirkt hier ein Aktor 42 senkrecht zur optischen Achse oder parallel zur Drehachse 18 und bewegt die Leiterkarte 36 auf und ab. Durch dieses Verschieben der Leiterkarte 36 verändert sich die relative Position von Lichtsender 24 und Lichtempfänger 34 zu deren Sendeoptik 26 beziehungsweise Empfangsoptik 32 und damit effektiv der Kippwinkel β der Ausrichtung der Lichtstrahlen 28, 30. So muss nicht das ganze Abtastmodul 22a-b gekippt werden, sondern es wird nur eine möglichst geringe Masse bewegt. Über den Hebel der Brennweite ist diese Verstellung besonders effizient, und das Trägheitsmoment der Anordnung ändert sich durch die Verstellung praktisch nicht.

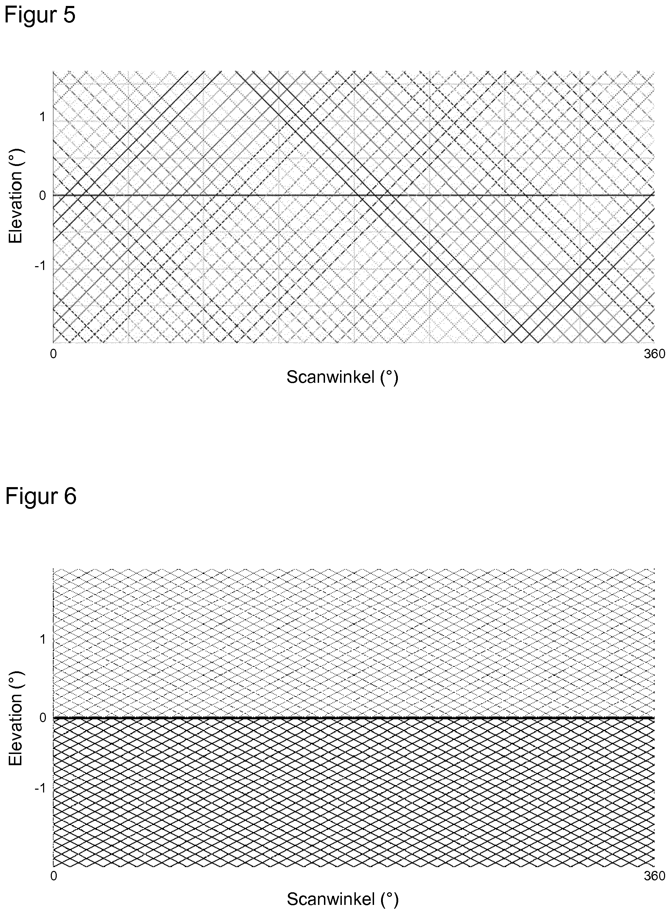

Über Kippwinkel β und/oder Drehwinkel γ, die vorzugsweise individuell je Abtastmodul 22 eingestellt werden können, lassen sich nun flexibel je nach Anwendung und momentaner Situation dreidimensionale Abtastmuster des Sensors 10 vorgeben. Einige dieser Abtastmuster sollen nun beispielhaft unter Bezugnahme auf die Figuren 5 bis 7 vorgestellt werden. Dabei sind rein beispielhaft vier einstrahlige Abtastmodule 22 vorgesehen, die individuell verkippt werden können.

Figur 5 zeigt eine sägezahnartige lineare Variation des Kippwinkels β über die auf der X-Achse aufgetragene Drehstellung der Abtasteinheit 12 im auf der Y-Achse aufgetragenen Bereich von ±2°, wobei nicht nur der Zahlenwert austauschbar ist, sondern auch die lineare Variation durch andere Funktionen wie einen Sinus ersetzt werden kann. In dieser Konfiguration variieren alle vier Abtastmodule 22 ihren Kippwinkel β. Die Verstellung erfolgt mit zeitlich festem Bezug zur Rotation bei gleicher Frequenz, jedoch unterschiedlichem Phasenversatz je Abtastmodul 22. Außerdem ist die Frequenz so gewählt, dass ein Abtastmodul 22 eine komplette Auf- und Abbewegung über einen Scanbereich nicht von 360°, sondern beispielsweise schon von 350° vollzieht, so dass sich bei der nächsten Umdrehung ein zusätzlicher Phasenversatz von 10° ergibt. Somit werden bei der nächsten Umdrehung andere Punkte im Raum abgetastet, und durch den gegenseitigen Phasenversatz unter den Abtastmodulen 22 nochmals andere Punkte. Insgesamt wird durch Wahl eines geeigneten Abtastmusters eine nahezu lückenlose Abtastung in einer für die Anwendung geeigneten Wiederholfrequenz erreicht. Unvorhergesehene Ereignisse, wie etwa das Hervorstehen einer dünnen Stange aus einem Regal, werden erkannt. Könnte man dagegen die vier verfügbaren Lichtstrahlen 28 nur in festem Winkelabstand anordnen, so entstünden unweigerlich Detektionslücken zwischen den Lagen oder Abtastebenen.

Figur 6 zeigt das Abtastmuster einer Mischform, in dem zwei Abtastmodule 22 ähnlich wie in Figur 5 einen dreidimensionalen Raumbereich abtasten. Zwei weitere Abtastmodule 22 messen bei einem konstanten Kippwinkel β=0 nur auf der zentralen Abtastebene. Die Verwendung mehrerer Abtastmodule 22 für dieselbe Abtastebene führt effektiv zu einer Erhöhung der Scanfrequenz, da je einzelnem Umlauf schon eine mehrfache Abtastung erfolgt. Insbesondere bei einem 180°-Versatz der beiden Abtastmodule wie in Figur 6 ergeben sich Messdaten, die in jeglicher Hinsicht der doppelten Scanfrequenz entsprechen. Dieses Abtastmuster ist ein Beispiel, wie zugleich weit gefächert ein großer Raumbereich und ein Ausschnitt mit höherer Auflösung abgetastet werden kann.

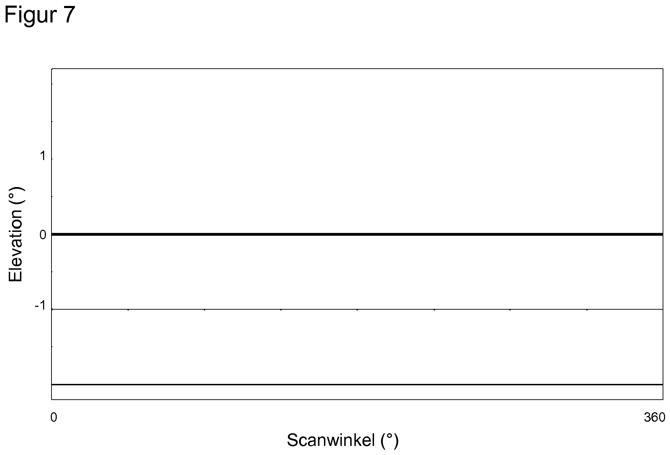

Figur 7 zeigt ein Abtastmuster, bei dem alle vier Abtastmodule 22 auf einem festen Kippwinkel β gehalten werden und folglich eine Ebene erfassen. In diesem Beispiel wird erneut die zentrale Ebene bei β =0 doppelt abgetastet, zwei weitere Abtastmodule 22 sind auf die Ebene bei β=-1° und β =-2° eingestellt. Da vorzugsweise jedes Abtastmodul 22 mit einem eigenen variablen Bewegungsprofil ansteuerbar ist, sind je Abtastmodul 22 praktisch beliebige Abtastmuster wie in Figur 5, feste Kippwinkel β wie in Figur 7 oder Mischformen wie in Figur 6 möglich. Die Auswahl der Bewegungsprofile kann für eine bestimmte Anwendung festgelegt werden, aber auch situationsabhängig erfolgen. Beispielsweise passen sich Bewegungsprofile an Fahrzeugparameter wie die Geschwindigkeit oder Bewegungsrichtung eines Fahrzeugs mit dem Sensor 10 an. Ein anderes Beispiel ist eine Drehzahländerung der Abtasteinheit 12, die andere Bewegungsprofile erfordert, oder der Ausgleich von Toleranzen, wenn insbesondere anhand der Messdaten festgestellt wird, dass die eingestellten Kippwinkel β nicht den gewünschten Kippwinkel β entsprechen, oder sogar zum Ausgleich eines Taumelns der Abtasteinheit 12. In bevorzugten Ausführungsformen werden Bewegungsprofile anhand der Auswertung bisheriger Messdaten verändert, um einen interessierenden Bereich innerhalb des Raumbereichs genauer aufzulösen und beispielsweise ein Objekt zu verfolgen, das bei herkömmlichen starren Abtastebenen in Abtastlücken verschwinden könnte.

Auch wenn sich die Erläuterungen zu den Figuren 5 bis 7 exemplarisch auf den Kippwinkel β beziehen, kann alternativ oder zusätzlich auch ein Bewegungsprofil für den Drehwinkel γ verwendet werden. Jedenfalls entsteht erfindungsgemäß die Möglichkeit eines weitgehend frei gestaltbaren Abtastmusters oder Scanraums. Je mehr Abtastmodule 22 vorgesehen sind, umso dichter kann der Raum abgetastet werden beziehungsweise umso größer kann der umfasste Elevationswinkelbereich sein, und umso mehr kleinere Teilausschnitte oder Abtastebenen können darin sogar mehrfach mit erhöhter Auflösung erfasst werden.

## Patentansprüche

1. Optoelektronischer Sensor (10), insbesondere Laserscanner, zur Erfassung von Objekten in einem Überwachungsbereich (20), der eine um eine Drehachse (18) bewegliche Abtasteinheit (12) mit mindestens einem Abtastmodul (22) zur Abtastung des Überwachungsbereichs (22) im Verlauf der Bewegung der Abtasteinheit (12) um die Drehachse (18) und zum Erzeugen von entsprechenden Empfangssignalen sowie eine Auswertungseinheit (46) zur Gewinnung von Informationen über die Objekte aus den Empfangssignalen aufweist, wobei das Abtastmodul (22) mindestens einen Lichtsender (24) zum Aussenden eines Lichtstrahls (28) oder mehrerer voneinander separierter Lichtstrahlen (28) und mindestens einen Lichtempfänger (34) zum Erzeugen der Empfangssignale aus den von Objekten remittierten Lichtstrahlen (30) umfasst,
**dadurch gekennzeichnet,**
**dass** das Abtastmodul (22) eine Verstelleinheit (38, 42) aufweist, mittels derer das Abtastmodul (22) dynamisch innerhalb der Drehbewegung um einen Kippwinkel (β) verkippbar und/oder um einem Drehwinkel (γ) verdrehbar ist.

2. Sensor (10) nach Anspruch 1,
wobei die Verstelleinheit (38, 42) dafür ausgebildet ist, das Abtastmodul (22) periodisch zwischen zwei Kippwinkeln (β) hin und her zu verkippen.

3. Sensor (10) nach Anspruch 1 oder 2,
wobei die Verstelleinheit (38, 42) dafür ausgebildet ist, das Abtastmodul (22) periodisch zwischen zwei Drehwinkeln (γ) hin und her zu verdrehen.

4. Sensor (10) nach einem der vorhergehenden Ansprüche,
wobei die Verstelleinheit (38, 42) dafür ausgebildet ist, den Kippwinkel (β) und/oder den Drehwinkel (γ) des Abtastmoduls (22) mit festem Bezug zur Drehbewegung der Abtasteinheit (12) einzustellen.

5. Sensor (10) nach einem der vorhergehenden Ansprüche,
wobei die Verstelleinheit (38, 42) dafür ausgebildet ist, einen Kippwinkel (β) und/oder Drehwinkel (γ) zu halten.

6. Sensor (10) nach einem der vorhergehenden Ansprüche,
wobei die Verstelleinheit (38, 42) dafür ausgebildet ist, den Kippwinkelbereich (β) und/oder den Drehwinkelbereich (γ) dynamisch auf einen interessierenden Bereich einzuschränken.

7. Sensor (10) nach einem der vorhergehenden Ansprüche,
wobei die Auswertungseinheit (46) dafür ausgebildet ist, der Verstelleinheit (38, 42) einen interessierenden Bereich aufgrund von Messdaten vorzugeben.

8. Sensor (10) nach einem der vorhergehenden Ansprüche,
wobei die Verstelleinheit (38, 42) einen Aktor (42) aufweist, welcher das Abtastmodul (22) entsprechend dem einzustellenden Kippwinkel (β) gegen eine Lagerung (38) radial nach außen drückt.

9. Sensor (10) nach einem der vorhergehenden Ansprüche,
wobei die Verstelleinheit (38, 42) einen Aktor (42) aufweist, welcher eine Leiterkarte (36) mit dem Lichtsender (24) und dem Lichtempfänger (36) senkrecht zu deren optischer Achse bewegt.

10. Sensor (10) nach einem der vorhergehenden Ansprüche,
wobei mehrere Abtastmodule (22) vorgesehen sind, die untereinander identisch aufgebaut sind und/oder wobei zumindest einige Abtastmodule (22) übereinander und/oder in Drehrichtung zueinander versetzt angeordnet sind.

11. Sensor (10) nach einem der vorhergehenden Ansprüche,
wobei die Auswertungseinheit (46) dafür ausgebildet ist, aus einer Lichtlaufzeit zwischen Aussenden der Lichtstrahlen (28) und Empfangen der remittierten Lichtstrahlen (30) einen Abstand des Objekts zu bestimmen.

12. Verfahren zur Erfassung von Objekten in einem Überwachungsbereich (20), der mit Hilfe einer um eine Drehachse (18) beweglichen Abtasteinheit (12) mit mindestens einem Abtastmodul (12) abgetastet wird, wobei das Abtastmodul (22) einen Lichtstrahl (28) oder mehrere voneinander separierte Lichtstrahlen (28) aussendet, nach Remission an den Objekten entsprechende remittierte Lichtstrahlen (30) wieder empfängt und daraus Empfangssignale erzeugen, und wobei die Empfangssignale zur Gewinnung von Informationen über die Objekte ausgewertet werden,
**dadurch gekennzeichnet,**
**dass** das Abtastmodul (22) dynamisch innerhalb der Drehbewegung um einen Kippwinkel (β) verkippt und/oder um einem Drehwinkel (γ) verdreht wird.
